Europäisches Patentamt

European Patent Office

Office européen des brevets

(11) Publication number: **0 067 704**

**A2**

(12) # EUROPEAN PATENT APPLICATION

(21) Application number: **82303080.4**

(22) Date of filing: **14.06.82**

(51) Int. Cl.³: **H 02 K 1/04**
**H 02 K 9/19**

(30) Priority: **17.06.81 GB 8118655**

(43) Date of publication of application:
**22.12.82 Bulletin 82/51**

(84) Designated Contracting States:
**AT BE CH DE FR GB IT LI LU NL SE**

(71) Applicant: **MATHER & PLATT LIMITED**
**Park Works**
**Manchester, M10 6BA(GB)**

(72) Inventor: **Williamson, Terence John**
**30 Martin Close**
**Denton Lancashire(GB)**

(72) Inventor: **Gradwell, Kevan John**
**3 Kilmaine Drive**
**Ladybridge Bolton Lancashire(GB)**

(74) Representative: **Massey, Alexander et al,**
**MARKS & CLERK Scottish Life House Bridge Street**
**Manchester, M3 3DP(GB)**

(54) **Electric motors.**

(57) A submersible electric motor/pump combination for use, say, in extracting hydrocarbons in off-shore drilling installations has a stator formed of annular laminae of magnetically soft metal each individually encapsulated by a porcelain enamelling process. The rotor may be similarly formed or it may be of unitary construction and formed of magnetic stainless steel.

EP 0 067 704 A2

Croydon Printing Company Ltd

2.

This invention relates to electric motors and particularly to the electric motors of submersible electric motor/pump combinations. It is also concerned with such submersible electric motor/pump combinations.

An example of such a combination is one used in down-hole pumping where the motor has to drive the pump in conditions where, for example, the pressure is 2000 p.s.i. and the temperature is $95^{\circ}$C. It has, for example, to operate in sweet or sour fluids such as hydrocarbons with up to a 50% seawater cut. A particular but not exclusive application is off-shore oil extraction.

It is to be clearly understood, however, that the invention can be applied to any submersible motor/pump combination whatever the submersible application.

To allow electric motors to operate while submersed it is usual to "can" the motor within a metal casing but this entails fluid sealing problems and also energy losses. The fluid sealing problems arise out of the need to use a number of mechanical seals which tend to have relatively short working lives in this particular usage which means closing down the electric motor/pump combination for repair and/or replacement purposes. Moreover, it is necessary to pressurise the motor necessitating the provision of valve gear for pressure relief and bypass purposes which, of course, augments the cost of such a motor/ pump combination. More specifically the "can" is

3.

filled with clean mineral oil which tends to expand at the working temperatures of the electric motor/ pump combination necessitating also the use of balancing diaphragms within the "can".

It will readily be appreciated that with such "canning" the cost of the electric motor/pump combination is high and the combination is prone to breakdown involving unsatisfactory downtime.

It is also known to "can" using a plastics material but it is difficult to achieve a sufficiently effective fluid seal at the plastics/metal interface of the plastics "can" and metal casing of the electric motor/pump combination.

It is an object of the present invention to obviate or mitigate the aforesaid difficulties.

According to a first aspect of the present invention we provide a stator for an electric motor of a submersible motor/pump combination, the stator comprising annular laminae each constituted by magnetically soft metal encapsulated by a procelain enamelling process.

Preferably, a bundle of the individually porcelain-encapsulated laminae are encapsulated together in assembly by a porcelain enamelling process, the stator being built up from such encapsulated bundles.

The annular stator laminae are preferably formed slightly inboard of their inner diameter with the usual equi-angularly spaced winding slots, and at their

4.

outer diameter with equi-angularly spaced slots or cut-outs to define liquid flow passages with the motor casing for cooling purposes.

A second aspect of the invention is an electric motor, especially an electric motor of a submersible motor/pump combination, having a stator as defined in the immediately preceding paragraph.

Preferably the electric motor has a rotor of unitary construction (i.e. non-laminer) and of magnetic stainless steel, the rotor being bored or slotted to accommodate current-carrying conductors.

Alternatively, the rotor comprises annular laminae each constituted by magnetically soft metal encapsulated by a porcelain enamelling process.

Preferably, the rotor is built up to the required length from these individually porcelain-encapsulated laminae and the whole rotor is then encapsulated by a porcelain enamelling process.

Preferably, a hollow shaft is keyed to the assembled stator, there being an opening in the motor casing to permit entry of liquid product which passes through the hollow shaft.

Preferably, the pump of the electric motor/pump combination is a multi-stage pump, and the end stage adjacent the electric motor acts as a centrifuge to throw solids out through an opening in the pump casing, such solids passing with some of the liquid product and,

5.

say, seawater to pass along the passages between the stator and motor casing, the major proportion of liquid product passing along the hollow shaft.

The porcelain enamelling process employed in this invention is conventional and well known to those skilled in the enamelling art. In consequence it will not be described in detail.

An embodiment of the present invention will now be described, by way of example, with reference to the accompanying drawings, in which:-

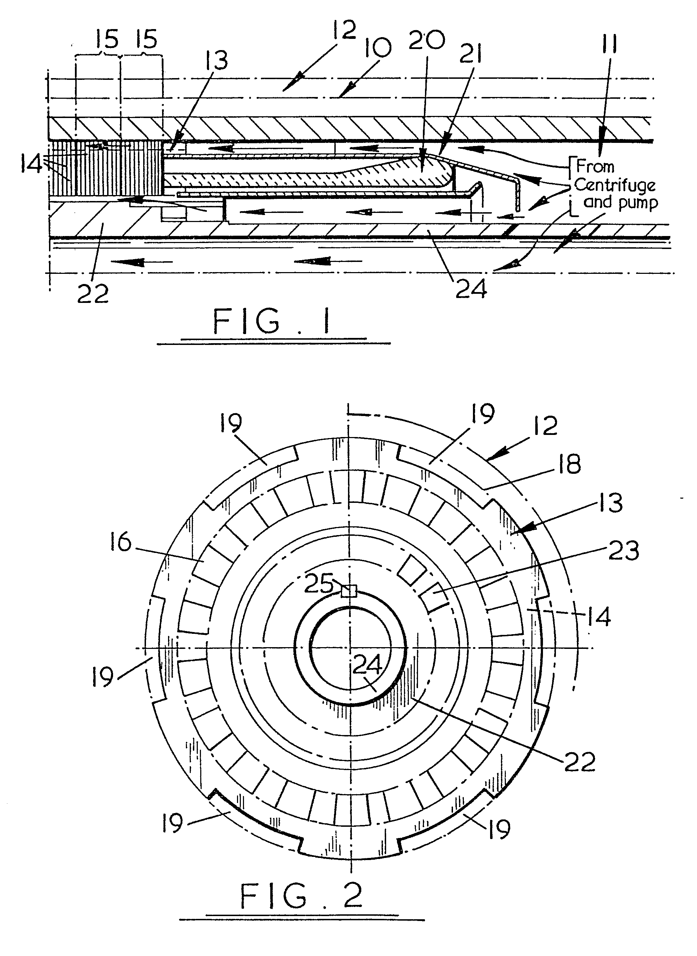

Fig. 1 is a fragmentary half-section of a submersible electric motor/pump combination according to the invention;

Fig. 2 is a diagrammatic transverse sectional view of the electric motor;

Fig. 3 shows the submersible electric motor/pump disposed within a product tube; and

Fig. 4 shows diagrammatically a multi-stage product extraction arrangement employing submersible electric motor/pump combinations according to the invention.

The submersible motor/pump combination comprises an electric motor 10 and a multi-stage centrifugal pump 11 used, in this instance for example, to raise hydrocarbons in an off-shore extraction situation. The combination, in addition to raising hydrocarbons, will perforce raise seawater and a certain amount of solids.

6.

In use, the combination will operate within a product tube 12. The depth at which hydrocarbon extraction is to take place will determine the number of combinations to be used spaced along the length of the product tube 12.

The stator 13 of the electric motor 10 is constituted by a series of annular laminae 14 of a magnetically soft metal, for example Si.Fe., each encapsulated by means of a porcelain enamelling process which is known per se. The deposition process may be a single or multi-stage one.

The bore surfaces of the laminae 14 preferably have two layers of porcelain enamel deposited thereon.

When each lamina 14 is encapsulated bundles 15 of encapsulated laminae are formed, each bundle 15 being encapsulated by a porcelain enamelling process. The stator 13 is then built up in the customary manner from these encapsulated bundles 15 and then the assembled stator may be subject to a porcelain enamelling process. This latter enamelling step is optional.

The stator laminae 14 are formed with slots 16, for example eighteen (equi-angularly spaced) for the stator windings, which slots 16 do not open to the stator bore. On their outside diameter the stator laminae 14 are formed with open slots or cut-outs 17, say six (equi-angularly spaced) which with the motor casing 18 define passages 19 for the liquid product, namely a

7.

hydrocarbon/seawater mix, which serves to cool the stator 13.

The stator end winding is indicated at 20 and is protected against shocks resulting from product flow by a deflector or shield 21.

Such a stator has excellent dielectric strength and seawater resistance properties.

It provides maximum heat loss dissipation. It is, as aforesaid, product cooled.

The rotor 22 of the electric motor 10 is constituted by a solid mass of magnetic stainless steel with the conductors (not shown) (bars of cupro-nickel alloy or silver alloy) accommodated in a ring of, say for example thirteen, equi-angularly spaced, axially-extending bores 23 parallel with and radially-spaced from the central axis of the rotor 22.

Alternatively, the conductors are accommodated in peripheral axially-extending slots cut in the rotor. In this instance, the conductors are disposed radially inwardly of the rotor periphery at the ends where they contact the short circuiting rings and at these regions stainless steel sleeves are shrunk on the rotor. This construction assists in reducing churning losses due to product fluid flow through the motor.

A hollow shaft 24 is keyed to the rotor 22 as indicated at 25 and is open to the flow of liquid hydrocarbon and seawater as are the passages 19.

8.

In an alternative rotor construction, the rotor is constituted by annular laminae of a magnetically soft metal, for example Si.Fe., each encapsulated by means of the porcelain enamelling process. These encapsulated laminae are then assembled together to form the stator and the whole is then encapsulated by further porcelain enamelling.

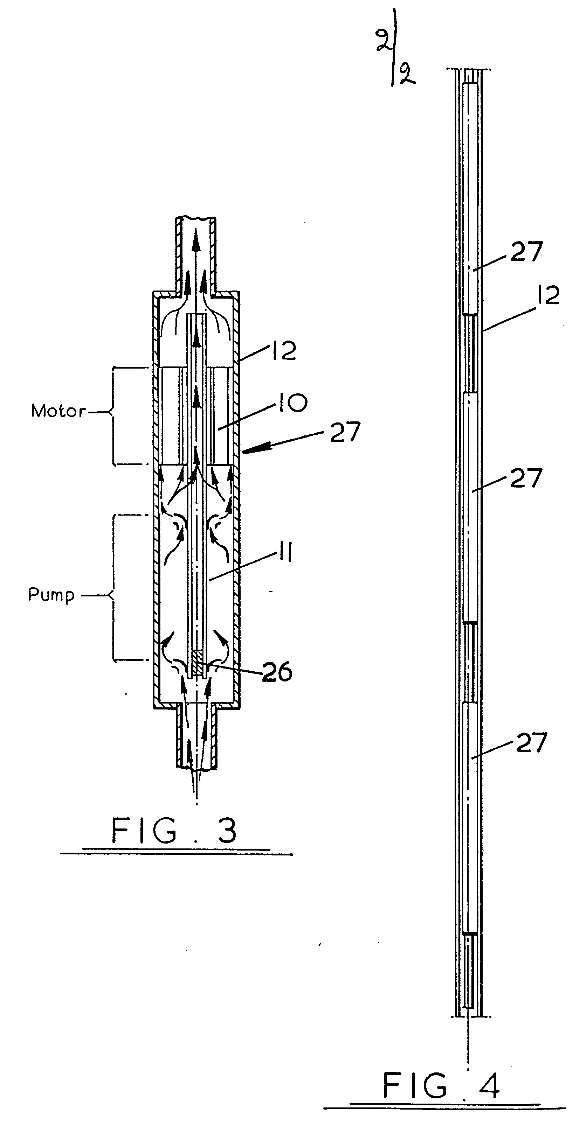

The abovedescribed submersible electric motor 10 is, as aforesaid, coupled as indicated in Fig. 3 to the multi-stage centrifugal pump 11. The stage of the pump 11 adjacent the electric motor 10 acts as a centrifuge and throws out solids _via_ an opening in the pump casing. Mainly liquid hydrocarbon and seawater pass through the hollow shaft 22 of the motor 10 while the centrifuged solids with some liquid hydrocarbon and seawater pass along the passages 19.

A plug 26 is provided at the pump inlet to prevent ingress of substantial solid material.

In use, a number of such submersible electric motor/pump combinations 27 (see Fig. 4) are located in axial spacing in the product tube 12 and serve to elevate extracted hydrocarbons and seawater, centrifuged solids simply falling back down between the combinations and product tube.

If any one of the combinations fail then the hydrocarbons and seawater simply flow upwardly through the hollow shafts.

An electric motor as described does not have the

9.

inherent drawbacks resulting from "canning" whether metal or plastics.

10.

CLAIMS:

1.   A stator for an electric motor of a submersible motor/pump combination, the stator comprising  annular laminae each constituted by magnetically soft metal encapsulated by a porcelain enamelling process.

2.   A stator as claimed in claim 1 in which a bundle of the individually-porcelain encapsulated laminae are encapsulated together in assembly by a porcelain enamelling process, the stator being built up from such encapsulated bundles.

3.   A stator as claimed in claim 1 or 2, in which the annular stator laminae are formed slightly inboard of their inner diameter with the usual equi-angularly spaced winding slots, and at their outer diameter with equi-angularly spaced slots or cut-outs to define liquid flow passages with the motor casing for cooling purposes.

4.   An electric motor, especially an electric motor of a submersible motor/pump combination, having a stator as claimed in any one of claims 1 to 3.

5.   An electric motor as claimed in claim 4 comprising a rotor  of unitary construction (i.e. non-laminar and of magnetic stainless steel, the rotor being bored or slotted to accommodate current-carrying conductors.

6.  An electric motor as claimed in claim 4 in which the rotor comprises annular laminae each constituted by magnetically soft metal encapsulated by a porcelain

11.

enamelling process.

7. An electric motor as claimed in claim 6, in which the rotor is built up to the required length from these individually porcelain encapsulated laminae and the whole rotor is then encapsulated by a porcelain enamelling process.

8. An electric motor as claimed in any one of claims 4 to 7, in which a hollow shaft is keyed to the assembled stator for passage therethrough of liquid product.

9. A submersible electric motor/pump combination incorporating an electric motor as claimed in any one of claims 4 to 8.

10. A submersible electric motor/pump combination as claimed in claim 9 in which the pump of the electric motor/pump combination is a multi-stage pump with a hollow shaft and the end stage adjacent the electric motor acts as a centrifuge to throw solids out through an opening in the pump casing and permit liquid product and, say, seawater to pass along the hollow shaft and the passages on the outside of the stator, centrifuged solids passing along the passages and not the hollow shaft.

11. A submersible electric motor/pump combination substantially as hereinbefore described with reference to the accompanying drawings.

0067704

FIG . 1

FIG . 2

Motor

12

10

27

11

Pump

26

FIG. 3

2/2

0067704

27

12

27

27

FIG. 4